# EUROPEAN PATENT APPLICATION

(11) **EP 3 396 757 A1**
(43) Date of publication of application: **31.10.2018**
(21) Application number: 16875780.5
(22) Date of filing: 16.12.2016
(51) Int. Cl.: H01M 8/02, C01G 25/02, C04B 35/486, C25B 9/00, C25B 13/04, H01B 1/06, H01B 13/00, H01M 8/12

(54) **PROTON CONDUCTOR, CELL STRUCTURE, METHODS FOR PRODUCING PROTON CONDUCTOR AND CELL STRUCTURE, FUEL CELL, AND WATER ELECTROLYSIS DEVICE**

(30) Priority: 18.12.2015 JP 2015247968; 31.05.2016 JP 2016108339
(71) Applicant: Sumitomo Electric Industries, Ltd., Osaka-shi, Osaka 541-0041 (JP); Kyoto University, Kyoto-shi, Kyoto 606-8501 (JP)
(72) Inventor: HIGASHINO, Takahiro, Itami-shi Hyogo 664-0016 (JP); NODA, Yohei, Itami-shi Hyogo 664-0016 (JP); MIYAMOTO, Kazunari, Itami-shi Hyogo 664-0016 (JP); HIRAIWA, Chihiro, Itami-shi Hyogo 664-0016 (JP); MIZUHARA, Naho, Itami-shi Hyogo 664-0016 (JP); TAWARAYAMA, Hiromasa, Itami-shi Hyogo 664-0016 (JP); TAKEUCHI, Hisao, Itami-shi Hyogo 664-0016 (JP); MAJIMA, Masatoshi, Itami-shi Hyogo 664-0016 (JP); UDA, Tetsuya, Kyoto-shi Kyoto 606-8501 (JP); HAN, Donglin, Kyoto-shi Kyoto 606-8501 (JP); ONISHI, Takayuki, Kyoto-shi Kyoto 606-8501 (JP); OTANI, Yuki, Kyoto-shi Kyoto 606-8501 (JP)
(74) Representative: Boult Wade Tennant LLP
(86) International application number: PCT/JP2016/087563
(87) International publication number: WO 2017/104806

(57) **Abstract**

A proton conductor contains a metal oxide having a perovskite structure and represented by AₐB_{b}M_{c}O_{3-δ} (wherein: A is at least one of Ba, Ca, and Sr; B is at least one of Ce and Zr; M is at least one of Y, Yb, Er, Ho, Tm, Gd, and Sc; 0.85≤a≤1; 0.5≤b<1; c=1-b; and δ is an oxygen deficiency amount), and a standard deviation in a triangular diagram representing an atomic composition ratio of the A, the B, and the M is not greater than 0.04.

## Description

### TECHNICAL FIELD

The present invention relates to a proton conductor, a cell structure, methods for producing the proton conductor and the cell structure, a fuel cell, and a water electrolysis device. This application claims priority on Japanese Patent Application No. 2015-247968 filed on December 18, 2015, and Japanese Patent Application No. 2016-108339 filed on May 31, 2016, the entire contents of which are incorporated herein by reference.

### BACKGROUND ART

PATENT LITERATURE 1 and PATENT LITERATURE 2 disclose, as a solid electrolyte of a fuel cell, a metal oxide having a perovskite structure such as yttrium-doped barium zirconate (BZY), yttrium-doped barium cerate (BCY), and a mixed oxide of yttrium-doped barium zirconate/barium cerate (BZCY).

Moreover, PATENT LITERATURE 3 states that, for example, an anode of a fuel cell is formed by firing a mixture of nickel oxide powder and powder of a metal oxide such as BZY.

Furthermore, NON PATENT LITERATURE 1 states that BaY₂NiO₅ is produced as a by-product in firing a mixture of nickel oxide powder and powder of a metal oxide such as BZY.

### CITATION LIST

### [PATENT LITERATURE]

PATENT LITERATURE 1: Japanese Laid-Open Patent Publication No. 2001-307546
PATENT LITERATURE 2: Japanese Laid-Open Patent Publication No. 2007-197315
PATENT LITERATURE 3: Japanese Laid-Open Patent Publication No. 2015-46251

### [NON PATENT LITERATURE]

NON PATENT LITERATURE 1: Journal of Power Sources 278 (2015) 614-622

### SUMMARY OF INVENTION

One aspect of the present disclosure is directed to a proton conductor containing a metal oxide having a perovskite structure and represented by formula (1):

AₐB_{b}M_{c}O_{3-δ} (1)

(wherein: A is at least one element selected from the group consisting of barium (Ba), calcium (Ca), and strontium (Sr); B is at least one element selected from the group consisting of cerium (Ce) and zirconium (Zr); M is at least one element selected from the group consisting of yttrium (Y), ytterbium (Yb), erbium (Er), holmium (Ho), thulium (Tm), gadolinium (Gd), indium (In), and scandium (Sc); "a" is a number that satisfies 0.85≤a≤1; "b" is a number that satisfies 0.5≤b<1; "c" is a number that satisfies c=1-b; and δ is an oxygen deficiency amount), wherein
a standard deviation in a triangular diagram representing an atomic composition ratio of the A, the B, and the M contained in the proton conductor is not greater than 0.04.

Another aspect of the present disclosure is directed to a method for producing a proton conductor containing a metal oxide having a perovskite structure and represented by formula (1):

AₐB_{b}M_{c}O_{3-δ} (1)

(wherein: A is at least one element selected from the group consisting of Ba, Ca, and Sr; B is at least one element selected from the group consisting of Ce and Zr; M is at least one element selected from the group consisting of Y, Yb, Er, Ho, Tm, Gd, In, and Sc; "a" is a number that satisfies 0.85≤a≤1; "b" is a number that satisfies 0.5≤b<1; "c" is a number that satisfies c=1-b; and δ is an oxygen deficiency amount), the method including:
a preparation step of preparing a material containing an element represented by the A, an element represented by the B, and an element represented by the M, at a ratio that satisfies the "a", the "b", and the "c"; and
a firing step of firing the material at a first firing temperature of 1500°C or higher for 20 hours or longer.

Still another aspect of the present disclosure is directed to a cell structure including: a cathode; an anode; and a solid electrolyte layer interposed between the cathode and the anode and having proton conductivity, wherein the anode contains the aforementioned proton conductor and a nickel compound.

Still another aspect of the present disclosure is directed to a method for producing a cell structure, the method including:
a step of preparing a cathode material, a solid electrolyte material having proton conductivity, and an anode material;
a step of laminating a layer containing the anode material and a layer containing the solid electrolyte material and then firing an obtained laminated body at a second firing temperature to form a joined body of an anode and a solid electrolyte layer; and
a step of laminating a layer containing the cathode material, on a surface of the solid electrolyte layer and firing an obtained laminated body to form a cathode, wherein
the anode material contains a proton conductor and a nickel compound, and the proton conductor is the aforementioned proton conductor.

Still another aspect of the present disclosure is directed to a method for producing a cell structure, the method including:
a step of preparing a cathode material, a solid electrolyte material having proton conductivity, and an anode material;
a step of laminating a layer containing the anode material and a layer containing the solid electrolyte material and then firing an obtained laminated body at a third firing temperature to form a joined body of an anode and a solid electrolyte layer; and
a step of laminating a layer containing the cathode material, on a surface of the solid electrolyte layer and firing an obtained laminated body to form a cathode, wherein
the anode material contains a proton conductor and a nickel compound, and
the proton conductor contains a metal oxide having a perovskite structure and represented by formula (1):

   AₐB_{b}M_{c}O_{3-δ} (1)
(wherein: A is at least one element selected from the group consisting of Ba, Ca, and Sr; B is at least one element selected from the group consisting of Ce and Zr; M is at least one element selected from the group consisting of Y, Yb, Er, Ho, Tm, Gd, In, and Sc; "a" is a number that satisfies 0.85≤a≤1; "b" is a number that satisfies 0.5≤b<1; "c" is a number that satisfies c=1-b; and δ is an oxygen deficiency amount)
and is obtained by firing a material containing an element represented by the A, an element represented by the B, and an element represented by the M at a ratio that satisfies the "a", the "b", and the "c", at a first firing temperature of 1500°C or higher for 20 hours or longer.

### BRIEF DESCRIPTION OF DRAWINGS

FIG. 1 illustrates a method for calculating a standard deviation and is a top view schematically showing a secondary particle of a proton conductor.
FIG. 2 illustrates the method for calculating the standard deviation and is a diagram obtained by introducing an XY coordinate system to a triangular diagram of atomic composition ratio.
FIG. 3 is a cross-sectional view schematically shows a cell structure according to an embodiment of the present invention.
FIG. 4 is a graph showing the lattice constants of proton conductors of Examples and Comparative Example.
FIG. 5 is a scanning electron micrograph of a joined body according to Example 1.
FIG. 6 is a scanning electron micrograph of a joined body according to Comparative Example 1.

### DESCRIPTION OF EMBODIMENTS

### [PROBLEMS TO BE SOLVED BY DISCLOSURE]

According to study by the present inventors, it has been found that: during operation of a fuel cell, a gas decomposing device, or the like, a by-product such as BaY₂NiO₅ described above can be decomposed to produce a decomposition product that clogs voids of an anode and voids of a cathode; and the voids of the anode and the voids of the cathode are clogged with the decomposition product, whereby oxidation reaction in the anode and reduction reaction in the cathode are limited.

Therefore, the present invention includes providing: a proton conductor that allows for a reduction in an amount of a by-product that can produce a decomposition product that limits oxidation reaction and reduction reaction; a method for producing the proton conductor; a cell structure that allows high power generation efficiency to be ensured; a method for producing the cell structure; a fuel cell that can achieve high power generation efficiency; and a water electrolysis device that allows hydrogen and oxygen to be obtained at high production efficiency.

### [ADVANTAGEOUS EFFECTS OF DISCLOSURE]

According to the present disclosure, it is possible to provide: a proton conductor that allows for a reduction in an amount of a by-product that can produce a decomposition product that limits oxidation reaction and reduction reaction; a method for producing the proton conductor; a cell structure that allows high power generation efficiency to be ensured; a method for producing the cell structure; a fuel cell that can achieve high power generation efficiency; and a water electrolysis device that allows hydrogen and oxygen to be obtained at high production efficiency.

### [DESCRIPTION OF EMBODIMENTS OF INVENTION]

First, contents of embodiments of the present invention will be listed and described.
(1) A proton conductor according to an embodiment of the present invention contains a metal oxide having a perovskite structure and represented by formula (1):

   AₐB_{b}M_{c}O_{3-δ} (1)

   (wherein: A is at least one element selected from the group consisting of Ba, Ca, and Sr; B is at least one element selected from the group consisting of Ce and Zr; M is at least one element selected from the group consisting of Y, Yb, Er, Ho, Tm, Gd, In, and Sc; "a" is a number that satisfies 0.85≤a≤1; "b" is a number that satisfies 0.5≤b<1; "c" is a number that satisfies c=1-b; and δ is an oxygen deficiency amount).
   A standard deviation in a triangular diagram representing an atomic composition ratio of the A, the B, and the M contained in the proton conductor is not greater than 0.04. By using the proton conductor for production of a cell structure, an amount of a by-product that is a by-product contained in the obtained cell structure and that can produce a decomposition product that clogs voids of an anode and voids of a cathode, thereby limiting oxidation reaction in the anode and reduction reaction in the cathode, can be reduced. Hereinafter, the "by-product that can produce a decomposition product that clogs voids of an anode and voids of a cathode, thereby limiting oxidation reaction in the anode and reduction reaction in the cathode" is also referred to as "specific by-product". Examples of the specific by-product include BaY₂NiO₅, but are not particularly limited thereto.
(2) In the formula (1), the A preferably, contains Ba. In addition, in the formula (1), the B preferably contains Zr. Furthermore, in the formula (1), the M preferably contains Y. By using the proton conductor for production of a cell structure, the obtained cell structure can have improved proton conductivity and durability. In addition,
(3) the standard deviation in the triangular diagram representing the atomic composition ratio of the A, the B, and the M contained in the proton conductor is preferably not greater than 0.037. By using the proton conductor for production of a cell structure, the amount of the by-product contained in the obtained cell structure can be further reduced.
(4) A method for producing a proton conductor according to an embodiment of the present invention is a method for producing a proton conductor containing a metal oxide having a perovskite structure and represented by formula (1):

   AₐB_{b}M_{c}O_{3-δ} (1)

   (wherein: A is at least one element selected from the group consisting of Ba, Ca, and Sr; B is at least one element selected from the group consisting of Ce and Zr; M is at least one element selected from the group consisting of Y, Yb, Er, Ho, Tm, Gd, In, and Sc; "a" is a number that satisfies 0.85≤a≤1; "b" is a number that satisfies 0.5≤b<1; "c" is a number that satisfies c=1-b; and δ is an oxygen deficiency amount).
   The method for producing the proton conductor according to the embodiment of the present invention includes: a preparation step of preparing a material containing an element represented by the A, an element represented by the B, and an element represented by the M, at a ratio that satisfies the "a", the "b", and the "c"; and a firing step of firing the material at a first firing temperature of 1500°C or higher for 20 hours or longer. By using, for production of a cell structure, the proton conductor obtained by the method, the amount of the specific by-product contained in the obtained cell structure can be reduced.
(5) The method may further include a preliminary firing step of preliminarily firing the material at a temperature less than 1500°C, after the preparation step and before the firing step. In this case,
(6) the method preferably further includes a pulverization step of pulverizing the preliminarily fired material, after the preliminary firing step and before the firing step. By the pulverization step, variations in the atomic composition ratio of the material to be subjected to the firing step can be decreased in advance. Therefore, variations in the atomic composition ratio of the proton conductor obtained through the firing step are easily further decreased. In addition, the time taken for the firing step can be shortened.
(7) The first firing temperature is preferably not lower than 1600°C. This is because the effect of reducing the contained amount of the specific by-product further improves.
(8) A cell structure according to an embodiment of the present invention includes a cathode, an anode, and a solid electrolyte layer interposed between the cathode and the anode and having proton conductivity. In this case, the anode contains the aforementioned proton conductor and a nickel compound. With the cell structure, high power generation efficiency can be achieved.
(9) A method for producing a cell structure according to an embodiment of the present invention includes:
   a step of preparing a cathode material, a solid electrolyte material having proton conductivity, and an anode material;
   a step of laminating a layer containing the anode material and a layer containing the solid electrolyte material and then firing an obtained laminated body to form a joined body of an anode and a solid electrolyte layer; and
   a step of laminating a layer containing the cathode material, on a surface of the solid electrolyte layer and firing an obtained laminated body at a second firing temperature to form a cathode. The anode material contains a proton conductor and a nickel compound. The proton conductor is the proton conductor in the above (1). With the cell structure obtained by the method, high power generation efficiency can be achieved.
(10) A method for producing a cell structure according to an embodiment of the present invention includes:
   a step of preparing a cathode material, a solid electrolyte material having proton conductivity, and an anode material;
   a step of laminating a layer containing the anode material and a layer containing the solid electrolyte material and then firing an obtained laminated body at a third firing temperature to form a joined body of an anode and a solid electrolyte layer; and
   a step of laminating a layer containing the cathode material, on a surface of the solid electrolyte layer and firing an obtained laminated body to form a cathode. The anode material contains a proton conductor and a nickel compound, and the proton conductor contains a metal oxide having a perovskite structure and represented by formula (1):

      AₐB_{b}M_{c}O_{3-δ} (1)

      (wherein: A is at least one element selected from the group consisting of Ba, Ca, and Sr; B is at least one element selected from the group consisting of Ce and Zr; M is at least one element selected from the group consisting of Y, Yb, Er, Ho, Tm, Gd, In, and Sc; "a" is a number that satisfies 0.85≤a≤1; "b" is a number that satisfies 0.5≤b<1; "c" is a number that satisfies c=1-b; and δ is an oxygen deficiency amount)
   and is obtained by firing a material containing an element represented by the A, an element represented by the B, and an element represented by the M at a ratio that satisfies the "a", the "b", and the "c", at a first firing temperature of 1500°C or higher for 20 hours or longer. With the cell structure obtained by the method, high power generation efficiency can be achieved similarly to the cell structure in the above (8) and the cell structure obtained by the method in the above (9).
(11) The first firing temperature is preferably not lower than the third firing temperature. This is because the effect of reducing the contained amount of the specific by-product further improves.
(12) A fuel cell according to an embodiment of the present invention is a fuel cell including an anode containing the proton conductor described in any one of the above (1) to (3). With the fuel cell described in the above (12), high power generation efficiency can be achieved.
(13) A water electrolysis device according to an embodiment of the present invention is a water electrolysis device including an anode containing the proton conductor described in any one of the above (1) to (3). With the water electrolysis device described in the above (13), hydrogen and oxygen can be obtained at high production efficiency.

### [DETAILS OF EMBODIMENTS OF INVENTION]

Hereinafter, specific examples of embodiments of the present invention will be specifically described with reference to the drawings as appropriate. The present invention is not limited to these examples and is indicated by the claims, and is intended to include meaning equivalent to the claims and all modifications within the scope of the claims.

### 1. Proton Conductor

A proton conductor according to the present embodiment can be used, for example, as a material for producing an anode. The form of the proton conductor is normally powder. Hereinafter, the proton conductor of the present embodiment is also referred to as "powdery proton conductor". The powdery proton conductor contains a metal oxide that has a perovskite structure and that is represented by formula (1):

AₐB_{b}M_{c}O_{3-δ} (1)

(wherein: A is at least one element selected from the group consisting of Ba, Ca, and Sr; B is at least one element selected from the group consisting of Ce and Zr; M is at least one element selected from the group consisting of Y, Yb, Er, Ho, Tm, Gd, In, and Sc; "a" is a number that satisfies 0.85≤a≤1; "b" is a number that satisfies 0.5≤b<1; "c" is a number that satisfies c=1-b; and δ is an oxygen deficiency amount). In the present description, the element represented by the "A" in formula (1) is also referred to as "element A". In addition, the element represented by the "B" in formula (1) is also referred to as "element B". Furthermore, the element represented by the "M" in formula (1) is also referred to as "element M".

An anode is formed by performing the following operation. First, the powdery proton conductor and a nickel compound are mixed to obtain a mixture. Next, the obtained mixture is fired to form an anode. During formation of the anode, the element A contained in the powdery proton conductor and nickel (Ni) derived from the nickel compound react with each other, thereby producing a low-melting-point compound. The low-melting-point compound forms a liquid phase during the firing. The liquid phase enters between the powdery proton conductors. When the low-melting-point compound contained in the entered liquid phase reacts with the element M contained in the powdery proton conductor, a by-product is produced. The by-product easily decomposes in an atmosphere during operation of a fuel cell, a gas decomposing device, or the like. When the by-product is decomposed, a decomposition product is produced in the anode and in a cathode. The decomposition product clogs voids of the anode and voids of the cathode, thereby limiting oxidation reaction in the anode and reduction reaction in the cathode. Examples of the low-melting-point compound include BaNiO₂, but are not particularly limited thereto. Examples of the by-product include BaY₂NiO₅, but are not particularly limited thereto. Examples of the decomposition product include Ba(OH)₂ and BaCO₃, but are not particularly limited thereto. For example, when the element A is Ba, BaNiO₂ is produced as the low-melting-point compound. In this case, BaY₂NiO₅ is produced as the by-product. In addition, Ba(OH)₂ and BaCO₃ are produced as the decomposition product.

According to study by the present inventors, it has been found that when variations in the atomic composition ratio of the powdery proton conductor are larger, the liquid phase is more easily produced, resulting in an increase in produced amount of the by-product. When there are variations in the atomic composition ratio of the powdery proton conductor, the element A, the element B, or the element M is not uniformly disposed at an A site or a B site of a perovskite structure formed by firing. Therefore, in each secondary particle of the powdery proton conductor, an element A-rich region, an element B-rich region, and an element M-rich region are present. As described above, the liquid phase (the low-melting-point compound) is easily produced in the element A-rich region where there are many reaction points, and the produced liquid phase produces the by-product in a large amount in the element M-rich region. In the present description, the phrase "there are variations in the atomic composition ratio of the powdery proton conductor" means that the atomic composition ratio is different depending on a position within the secondary particle. In addition, the term "primary particle" refers to a single crystal particle having uniform crystal orientation. The term "secondary particle" refers to an aggregate obtained by aggregation of a plurality of primary particles through chemical bond or the like.

Therefore, in the present embodiment, a powdery proton conductor having an atomic composition ratio in which variations are small is provided. That is, in the powdery proton conductor of the present embodiment, a standard deviation σ in a triangular diagram that represents an atomic composition ratio of the element A, the element B, and the element M is not greater than 0.04. The standard deviation σ is more preferably not greater than 0.037.

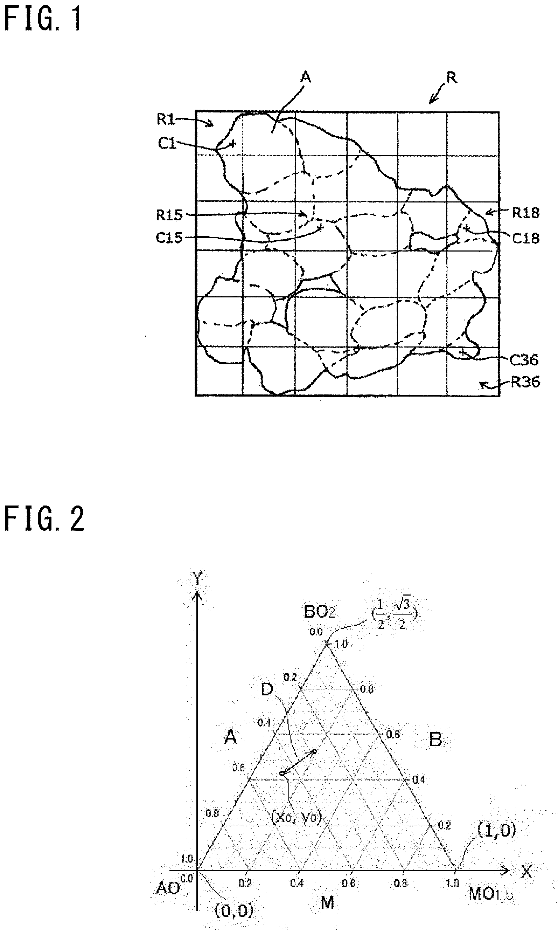

A method for calculating the standard deviation σ will be described with reference to FIG. 1 and FIG. 2. First, a transmission electron microscope (TEM) is prepared for observing the secondary particles of the powdery proton conductor. To confirm variations in composition that influence the proton conductivity (that is, variations in atomic composition ratio), analysis of the powdery proton conductor at a secondary particle level is needed. The particle diameter of the secondary particle is in nano order. Thus, when a scanning electron microscope (SEM) is used, it is difficult to perform the following analysis.

An arbitrary one secondary particle A is selected from the secondary particles of the powdery proton conductor, and a minimum rectangle R that is circumscribed about the outer edge of the secondary particle A when the secondary particle A is seen from one direction is assumed. Next, the rectangle R is equally divided into 36 regions R (R1 to R36), and a center of gravity C (C1 to C36) of the secondary particle A included in each region R (R1 to R36) is determined (FIG. 1 shows only C1, C15, C18, and C36). Each center of gravity C may be determined on the assumption that the specific gravity of the secondary particle A is uniform within each region. When the secondary particle A is not included in a region, the center of gravity C is determined for the regions other than this region. An atomic composition ratio at each determined center of gravity C is obtained by energy dispersive X-ray spectroscopy (EDX). The obtained atomic composition ratio CR at each center of gravity C is plotted in the triangular diagram (triangular graph) that represents the atomic composition ratio of the element A, the element B, and the element M. The triangular diagram is a diagram that is generally used for indicating the composition ratio of a ternary compound.

In the case where an atomic composition ratio CRx at a region Rx is not a material composition ratio of a material containing all three components (the element A, the element B, and the element M) among materials used in producing the powdery proton conductor, the atomic composition ratio CRx is not to be plotted. In the "region Rx", "x" indicates a number of each region. For example, when the region R is R1, "x" is 1. In other words, when the atomic composition ratio CRx is to be plotted in the triangular diagram, if the plot is on each side including vertexes, the atomic composition ratio CRx is not plotted. In this case, an atomic composition ratio CRy at another point Y (for example, an arbitrary point near the center of gravity Cx, not shown) within the region Rx is calculated, and is plotted in the triangular diagram. Examples of the "case of not being the material composition ratio of the material containing all the three components (the element A, the element B, and the element M)" include a case of being an atomic composition ratio corresponding to a material containing one of the element A, the element B, and the element M, and a case of being an atomic composition ratio corresponding to a material containing two of the element A, the element B, and the element M.

Next, a coordinate system is introduced to the triangular diagram. For example, as shown in FIG. 2, the side indicating the atomic composition ratio of the element M is set as an X axis, and an axis perpendicular to the X axis is set as a Y axis. In this case, the triangular diagram is placed such that a vertex of the triangular diagram, at which "c" in the atomic composition ratio for the element M is 0 (zero), "b" in the atomic composition ratio for the element B is 0 (zero), and "a" in the atomic composition ratio for the element A is 1, is located at an origin (0, 0). In this case, the coordinate of a vertex of the triangular diagram, at which "c" in the atomic composition ratio for the element M is 1, "a" in the atomic composition ratio for the element A is 0 (zero), and "b" in the atomic composition ratio for the element B is 0 (zero), is (1, 0); and the coordinate of a vertex of the triangular diagram, at which "b" in the atomic composition ratio for the element B is 1, "c" in the atomic composition ratio for the element M is 1, and "a" in the atomic composition ratio for the element A is 0 (zero), is (1/2, √3/2).

Each of the coordinates (x, y) of the atomic composition ratios CR at the plotted 36 points (36-x points when a region not including the secondary particle A is present at x locations; 0≤x<36) is obtained, and an average coordinate (x₀, y₀) is calculated. The average coordinate (x₀, y₀) can be calculated by dividing each of the sum of the x values and the sum of the y values in the coordinates of all the plotted points by (36-x). Next, a distance D between the average coordinate (x₀, y₀) and each plotted coordinate (x, y) is obtained. The distance D may be actually measured, or may be calculated by using the Pythagorean theorem. Finally, a standard deviation σd of the distances D is obtained. The standard deviation σd of the distances D indicates variations in the coordinate (x, y) with respect to the average coordinate (x₀, y₀). That is, the standard deviation σd indicates variations (the standard deviation σ) in the atomic composition ratio of the element A, the element B, and the element M in the triangular diagram.

The powdery proton conductor may contain a compound other than the metal oxide represented by formula (1), such as the materials of the powdery proton conductor, a metal oxide that does not have a perovskite structure, and a metal oxide that has a perovskite structure with an atomic composition ratio that does not satisfy 0.85≤a≤1 and 0.5≤b<1. The powdery proton conductor preferably contains the compound other than the metal oxide represented by formula (1), in a small amount. For example, the compound other than the metal oxide represented by formula (1) is preferably contained in the proton conductor in an amount (for example, 5 mass%) that allows a peak of the compound to be narrowly confirmed through X-ray diffraction. The standard deviation σ is calculated, with the materials of the powdery proton conductor and the like being excluded, as described above.

The secondary particle diameter of the powdery proton conductor is not particularly limited, and is 50 to 500 nm, for example. In this range, from the viewpoint of sinterability, the secondary particle diameter is preferably 50 to 300 nm. In the present description, the secondary particle diameter of the powdery proton conductor is a secondary particle diameter obtained by a laser diffraction type particle size distribution measuring device.

In formula (1), the A represents at least one element selected from the group consisting of Ba (barium), Ca (calcium), and Sr (strontium). Among these elements, from the viewpoint of obtaining favorable proton conductivity, in formula (1), the A preferably contains Ba and is more preferably only Ba. From the viewpoint of obtaining favorable proton conductivity, the proportion of Ba in the A is preferably not less than 50 at% and more preferably not less than 80 at%.

In formula (1), the "a" [the ratio of the element A relative to the sum of the element B and the element M] only needs to be not less than 0.85 and not greater than 1 (0.85≤a≤1) and is not particularly limited. In this range, from the viewpoint of further reducing the produced amount of the by-product BaY₂NiO₅, the "a" in formula (1) is preferably not greater than 0.99, more preferably not greater than 0.98, and further preferably not greater than 0.96. In addition, from the viewpoint of ensuring favorable proton conductivity, in formula (1), the "a" is preferably not less than 0.86 and more preferably not less than 0.88.

In formula (1), the B represents at least one element selected from the group consisting of Ce (cerium) and Zr (zirconium). Among these elements, from the viewpoint of ensuring durability in the case of use for a cell structure, in formula (1), the B preferably contains Zr and is more preferably only Zr. From the viewpoint of ensuring sufficient durability of the cell structure, the proportion of Zr in the B is preferably not less than 50 at% and more preferably not less than 80 at%.

In formula (1), the "b" [the ratio of the element B relative to the sum of the element A and the element M] only needs to be equal to or greater than 0.5 and less than 1 (0.5≤b<1) and is not particularly limited. In this range, from the viewpoint of ensuring proton conductivity, the "b" in formula (1) is preferably not less than 0.1 and more preferably not less than 0.12. From the viewpoint of ensuring chemical stability, the "b" in formula (1) is preferably not greater than 0.25 and more preferably not greater than 0.20.

In formula (1), the M is at least one element selected from the group consisting of Y (yttrium), Yb (ytterbium), Er (erbium), Ho (holmium), Tm (thulium), Gd (gadolinium), In (indium), and Sc (scandium). The element M is a dopant. The dopant causes oxygen deficiency, and thus the metal oxide having the perovskite structure exhibits proton conductivity. Among these elements, from the viewpoint of ensuring favorable proton conductivity, in formula (1), the M preferably contains at least one of Y and Yb and is more preferably is composed of only Y. From the viewpoint of ensuring favorable proton conductivity, the ratio of the sum of the number of atoms of Y and the number of atoms of Yb relative to the number of all the atoms contained in the M is preferably not less than 50 at% and more preferably not less than 80 at%.

In formula (1), the "c" [the ratio of the number of atoms of the element M relative to the number of all the atoms in formula (1)] only needs to be a number that satisfies c=1-b, and is not particularly limited.

### 2. Method for Producing Proton Conductor

The proton conductor according to the present embodiment can be produced by a method including: a step of preparing a material containing the element A, the element B, and the element M; and a firing step of firing the material at a first firing temperature of 1500°C or higher for 20 hours or longer (a first firing step). Thereafter, the obtained sintered body is pulverized, whereby a powdery proton conductor is obtained. At this time, the material contains the element A, the element B, and the element M at a ratio that satisfies the "a", the "b", and the "c" in formula (1).

By sintering the material at a high firing temperature as described above, a powdery proton conductor having small variations in the atomic composition ratio thereof (a standard deviation σ of not greater than 0.04) can be obtained. As a result, the amount of the by-product contained in a cell structure produced by using the powdery proton conductor as a material is reduced.

The degree of variations in the atomic composition ratio can be speculated from the lattice constant of the powdery proton conductor. For example, in the case where the powdery proton conductor is a metal oxide represented by BaₐZr_{0.8}Y_{0.2}O_{3-d} (wherein "a" is a number that satisfies 0.98<a≤1), if the lattice constant in a state where no water is contained in crystal falls within the range of not less than 4.220 and not greater than 4.225, the variations in the atomic composition ratio can be considered to be small. In addition, in the case where the powdery proton conductor is a metal oxide represented by BaₐZr_{0.8}Y_{0.2}O_{3-d} (wherein "a" is a number that satisfies 0.85<a≤0.98), if the lattice constant in a state where no water is contained in crystal falls within the range of equal to or greater than 4.200 and less than 4.220, the variations in the atomic composition ratio can be considered to be small.

The first firing step is performed in an oxygen-containing atmosphere. The oxygen content of the atmosphere used in the first firing step is not particularly limited. The first firing may be performed, for example, in the atmosphere (oxygen content: about 20 vol%), or in pure oxygen (oxygen content: 100 vol%).

From the viewpoint that the variations in the atomic composition ratio are further decreased, the first firing temperature is preferably not lower than 1600°C. From the viewpoint of improvement of productivity, the first firing temperature is preferably not higher than 1650°C. From the viewpoint that the variations in the atomic composition ratio are further decreased, a holding time at the first firing temperature is preferably not shorter than 20 hours and more preferably not shorter than 22 hours. From the viewpoint of improvement of productivity, the holding time at the first firing temperature is preferably not longer than 100 hours and more preferably not longer than 72 hours. The holding time at the first firing temperature is a period other than a temperature increasing process and a temperature decreasing process. The first firing temperature is an average temperature during the holding time. Thus, during the holding time, the temperature is permitted to become less than 1600°C for an instant or for a short time. Here, the "instant" means to be within 15 minutes. The "short time" means a time less than 20% of the holding time. However, in a time that is not shorter than 80% of the holding time, the temperature of the firing atmosphere is preferably maintained in the above temperature range, that is, at 1600°C or higher. The same applies to a second firing temperature and a third firing temperature described later.

A metal oxide for forming a proton conductor is normally sintered at a temperature of equal to or higher than 1200°C and lower than 1500°C. When the proton conductor sintered at such a low temperature is analyzed at a secondary particle level for atomic composition ratio, the standard deviation σ of the atomic composition ratio becomes greater than 0.04, and the contained amount of unreacted material becomes large (for example, becomes equal to or greater than 5 mass%). On the other hand, when a metal oxide for forming a proton conductor is sintered at a temperature of 1500°C or higher, variations in the atomic composition ratio become small.

A preliminary firing step of preliminarily firing the material at a preliminary firing temperature lower than 1500°C before the first firing step may be included. In the preliminary firing step, production of a metal oxide that is the target product mainly proceeds. In the case where the preliminary firing step is not performed, in the first firing step, production of the metal oxide that is the target product proceeds while the temperature increases from normal temperature to the first firing temperature. Therefore, by performing the preliminary firing step, production of the metal oxide easily sufficiently proceeds.

As long as the preliminary firing step is performed at a temperature lower than the first firing temperature (lower than 1500°C), the conditions of the preliminary firing step are not particularly limited. The preliminary firing step is performed, for example, in the atmosphere under a temperature condition of equal to or higher than 1200°C and lower than 1500°C for 5 to 20 hours. In the case where the preliminary firing step is performed under this temperature condition, synthesis of the metal oxide easily sufficiently proceeds. The preliminary firing step may be performed a plurality of times.

After the preliminary firing step, the material may be cooled (for example, to 100°C or lower) once, and then the first firing step may be performed. Alternatively, the preliminary firing step and the first firing step may be consecutively performed by increasing the temperature from the preliminary firing temperature directly to the first firing temperature.

Before the preliminary firing step, the material may be fired to remove water of crystallization and organic compounds contained in the material. Hereinafter, said firing before the preliminary firing step is also referred to as calcining. The conditions of the calcining are not particularly limited, and the calcining is performed, for example, by thermally treating the material under a temperature condition of not lower than 900°C and not higher than 1100°C for 5 to 20 hours.

In the case where the preliminary firing step is performed, a pulverization step of pulverizing the preliminarily fired material after the preliminary firing step and before the first firing step is preferably included. By the pulverization step, the variations in the atomic composition ratio of the material to be subjected to the first firing step are decreased. Therefore, the variations in the atomic composition ratio of a proton conductor obtained by the first firing step which is performed thereafter are easily further decreased. As a result, the holding time at the first firing temperature can be shortened. In the case where the preliminary firing step is performed, the holding time at the first firing temperature in the first firing step is, for example, not shorter than 20 hours and not longer than 72 hours.

Examples of a method for pulverizing the preliminarily fired material include a method using a pulverizer such as a ball mill, a rod mill, a grinding mill, and a jet mill, but are not particularly limited thereto. The conditions of the pulverization are also not particularly limited. For example, in the case of using a ball mill, the pulverization step may be performed at a rotational speed of 100 rpm to 650 rpm for 2 to 50 hours after the preliminarily fired material is cooled.

The material of the powdery proton conductor only needs to contain the element A, the element B, and the element M. Examples of the material of the powdery proton conductor include compounds such as oxides, carbonates, and nitrates, but are not particularly limited thereto. Examples of such compounds include barium oxide, barium carbonate, zirconium oxide, cerium oxide, yttrium oxide, ytterbium oxide, holmium oxide, erbium oxide, and yttrium-doped zirconium dioxide (YSZ), but are not particularly limited thereto. The material may be a single compound containing the element A, the element B, and the element M, or may be a combination of a plurality of compounds each containing at least one of the element A, the element B, and the element M. Examples of the single compound containing the element A, the element B, and the element M include yttrium-doped zirconium dioxide (YSZ), but are not particularly limited thereto. Examples of the compounds each containing at least one of the element A, the element B, and the element M include barium oxide, barium carbonate, zirconium oxide, cerium oxide, yttrium oxide, ytterbium oxide, holmium oxide, and erbium oxide, but are not particularly limited thereto.

### 3. Cell Structure

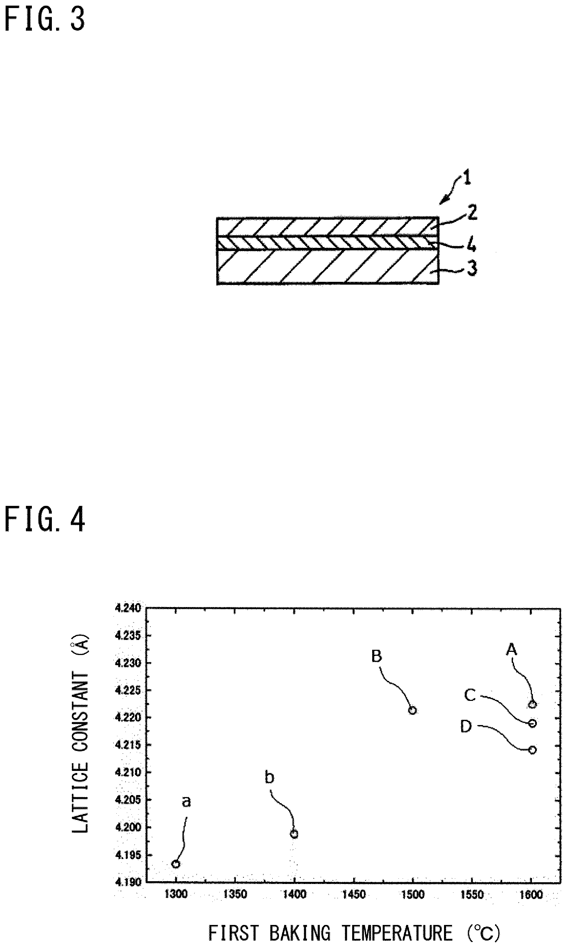

The proton conductor of the present embodiment is preferably used, for example, as a material of an anode 3 in a cell structure 1 of a fuel cell shown in FIG. 3. FIG. 3 is a cross-sectional view schematically showing the cell structure 1. The cell structure 1 of the present embodiment includes a cathode 2, the anode 3, and a solid electrolyte layer 4 that is interposed between the cathode 2 and the anode 3 and that has proton conductivity. The anode 3 contains a sintered body of the proton conductor of the present embodiment and a sintered body of a nickel compound. Such an anode 3 is formed by firing a mixture (an anode material) of powder of the powdery proton conductor of the present embodiment and powder of the nickel compound. Since the variations in the atomic composition ratio of the proton conductor of the present embodiment are small, the composition of the obtained sintered body of the proton conductor is also uniform. As a result, the proton conductivity of the obtained anode 3 improves, and power generation performance improves.

FIG. 3 shows a laminated cell structure 1 as an example of the cell structure of the present embodiment, but the shape of the cell structure 1 is not limited thereto. The shape of the cell structure 1 may be a cylindrical shape obtained by rolling up the cell structure 1 with the anode 3 located at the inner side so as to have a hollow space. In addition, in the example shown in FIG. 3, the thickness of the anode 3 is larger than the thickness of the cathode 2. In this case, the anode 3 serves as a support that supports the solid electrolyte layer 4 (further the cell structure 1). The thickness of the anode 3 does not need to be larger than the thickness of the cathode 2. For example, the thickness of the anode 3 and the thickness of the cathode 2 may be substantially equal to each other.

In the cell structure 1 of the present embodiment, since the variations in the atomic composition ratio of the proton conductor used as the material are small, production of the liquid phase is inhibited, and the amount of the specific by-product contained in the obtained anode 3 is reduced. As a result, the power generation performance further improves.

In the case of a compound in which the A contains Ba and the M contains Y in formula (1), BaY₂NiO₅ is normally produced as a by-product during firing with the nickel compound. The by-product particularly easily decomposes. However, in the cell structure 1 of the present embodiment, even in the case where the proton conductor used as the material contains Ba and Y, production of BaY₂NiO₅ is inhibited. This is because the standard deviation σ in the proton conductor is 0.04.

In consideration of balance between coefficient of linear expansion and power generation efficiency, the content of the nickel compound in the anode material is preferably 40 mass% to 90 mass% and more preferably 60 mass% to 90 mass%.

Examples of the nickel compound include nickel oxides, nickel hydroxides, nickel salts, and nickel halides, but are not particularly limited thereto. Examples of nickel salts include nickel inorganic acid salts such as nickel carbonate, but are not particularly limited thereto. Among these compounds, nickel oxides such as NiO are preferable from the viewpoint of reduction in manufacturing cost. These nickel compounds may be used singly, or two or more of these nickel compounds may be used in combination.

The thickness of the anode 3 is not particularly limited. For example, the thickness of the anode 3 may be 10 µm to 2 mm or may be 10 µm to 100 µm. In the case of causing the anode 3 to serve as a support that supports the solid electrolyte layer 4, the thickness of the anode 3 can be selected from the range of 100 µm to 2 mm as appropriate.

The sintered body of the proton conductor of the present embodiment and the sintered body of the nickel compound only need to occupy at least a portion of the anode 3. The entire anode 3 may be composed of the sintered body of the proton conductor and the sintered body of the nickel compound. Among such cases, when the thickness of the anode 3 is less than 30 µm, from the viewpoint of power generation efficiency, the entire anode 3 is preferably composed of the sintered body of the proton conductor and the sintered body of the nickel compound. When the thickness of the anode 3 is not less than 30 µm, from the viewpoint of power generation efficiency, the sintered body of the proton conductor and the sintered body of the nickel compound preferably occupy a region, of the anode 3, from the interface between the solid electrolyte layer 4 and the anode 3 to at least 30 µm. For example, in the case where a first region in which almost no Ni is contained, a second region in which a very small amount of Ni is contained, and a third region in which the Ni content rapidly increases as compared to that in the second region are present in this order in a direction from the solid electrolyte layer 4 to the anode 3, the "interface between the solid electrolyte layer 4 and the anode 3" is the boundary between the second region and the third region. The second region is a part of the solid electrolyte layer 4 and is a region containing a very small amount of Ni diffusing from the anode 3.

The material of the region in the anode 3 that is formed by a material other than the sintered body of the proton conductor and the sintered body of the nickel compound is not particularly limited. For example, the material may be any of only the nickel compound, only the proton conductor, only a proton conductor other than the powdery proton conductor, and a mixture of the nickel compound and the proton conductor other than the powdery proton conductor. The proton conductor other than the powdery proton conductor is not particularly limited, and, for example, can be selected from publicly known metal oxides as appropriate.

The solid electrolyte layer 4 contains a solid electrolyte having proton conductivity. The solid electrolyte layer 4 is formed by laminating a solid electrolyte material containing the solid electrolyte, on the anode 3, and then performing firing. In the firing for the solid electrolyte layer 4, Ni may diffuse from the anode 3 to the solid electrolyte layer 4 and react with the solid electrolyte in the solid electrolyte layer 4. In this case, the specific by-product may be also produced in the solid electrolyte layer 4. When the by-product contained in the solid electrolyte layer 4 decomposes to produce a decomposition product, the resistance of the solid electrolyte layer 4 easily becomes high. Furthermore, when the decomposition product is produced at the interface between the solid electrolyte layer 4 and the cathode 2, voids of the cathode 2 are clogged with the decomposition product, so that reduction reaction in the cathode 2 is limited. Diffusion of Ni occurs due to entry of the above-described liquid phase into the solid electrolyte layer 4. However, when the variations in the atomic composition ratio of the powdery proton conductor contained in the anode 3 are small, the liquid phase becomes less likely to be formed, and thus diffusion of Ni to the solid electrolyte layer 4 becomes less likely to occur. Accordingly, the amount of the by-product produced in the solid electrolyte layer 4 and the amount of the by-product produced at the interface between the solid electrolyte layer 4 and the cathode 2 are also reduced. Therefore, the cell structure 1 including such an anode 3 can also inhibit reduction reaction in the cathode 2.

As the solid electrolyte, conventionally known materials can be used. Among these materials, from the viewpoint of having excellent proton conductivity, preferable examples of the solid electrolyte include a compound having a perovskite crystal structure represented by formula (2):

A1ₐ₁B1_{1-b1}M1_{b1}O_{3-δ} (2)

(wherein: A1 is at least one element selected from the group consisting of Ba, Ca, and Sr; B1 is at least one element selected from the group consisting of Ce and Zr; M1 is at least one element selected from the group consisting of Y, Yb, Er, Ho, Tm, Gd, In, and Sc; "a1" is a number that satisfies 0.85≤a1≤1; "b1" is a number that satisfies 0<b1≤0.5; and δ is an oxygen deficiency amount). In the present description, the element represented by the "A1" in formula (2) is also referred to as "element A1". In addition, the element represented by the "B1" in formula (2) is also referred to as "element B1". Furthermore, the element represented by the "M1" in formula (2) is also referred to as "element M1".

Examples of the element A1 include the metal elements listed as examples of the element A, similarly. Among these metal elements, from the viewpoint of proton conductivity, the element A1 preferably contains Ba in the above range. Examples of the element B1 include the metal elements listed as examples of the element B, similarly. Among these metal elements, from the viewpoint of durability, the element B1 preferably contains Zr in the above range. Examples of the element M1 include the metal elements listed as examples of the element M, similarly. Among these metal elements, from the viewpoint of proton conductivity, the M1 preferably contains at least one of Y and Yb in the above range and is more preferably composed of only Y. From the viewpoint of further reducing the produced amount of the by-product, the solid electrolyte layer 4 preferably contains the powdery proton conductor of the present embodiment as a material.

The solid electrolyte layer 4 can contain, as the solid electrolyte, a component other than the compound having the perovskite crystal structure represented by formula (2). From the viewpoint of proton conductivity, the contained amount of the component is preferably small. For example, the contained amount of the solid electrolyte is preferably not less than 50 mass% or not less than 70 mass% of the solid electrolyte layer 4. The component other than the solid electrolyte is not particularly limited, and examples of the solid electrolyte include publicly known other compounds (including compounds not having proton conductivity).

The thickness of the solid electrolyte layer 4 is, for example, 1 µm to 50 µm and preferably 3 µm to 20 µm. In the case where the thickness of the solid electrolyte layer 4 falls within such a range, the resistance of the solid electrolyte layer 4 is reduced to be low.

The cathode 2 is formed by laminating a cathode material containing the following metal oxide, on the solid electrolyte layer 4, and then performing firing. Examples of the metal oxide contained in the cathode material include lanthanum strontium cobalt ferrite (LSCF, La_{1-d}Sr_{d}Co₁₋ₑFeₑO_{3-δ}, 0<d<1, 0<e<1, δ is an oxygen deficiency amount), lanthanum strontium manganite (LSM, La_{1-f}Sr_{f}MnO_{3-δ}, 0<f<1, δ is an oxygen deficiency amount), lanthanum strontium cobaltite (LSC, La_{1-g}Sr_{g}CoO_{3-δ}, 0<g<1, δ is an oxygen deficiency amount), and samarium strontium cobaltite (SSC, Sm₁₋ₕSrₕCoO_{3-δ}, 0<h<1, δ is an oxygen deficiency amount).

The cathode 2 may contain a catalyst such as Ag and Pt. This is because reaction between proton and an oxidant is promoted. In the case of containing a catalyst, the cathode 2 can be formed by mixing the catalyst and the above-described material and sintering the obtained mixture. In addition, the thickness of the cathode 2 is not particularly limited, but only needs to be about 10 µm to 30 µm.

### 4. Method for Producing Cell Structure

The cell structure 1 is produced by a method including: a step (first step) of preparing a cathode material, a solid electrolyte material having proton conductivity, and an anode material; a step (second step) of laminating a layer containing the anode material and a layer containing the solid electrolyte material and then firing an obtained laminated body at a second firing temperature or a third firing temperature to form a joined body of the anode 3 and the solid electrolyte layer 4; and a step (third step) of laminating a layer containing the cathode material, on the surface of the solid electrolyte layer 4, and then firing an obtained laminated body to form the cathode 2. At this time, the aforementioned mixture of the proton conductor and the nickel compound is used as the anode material. Specifically, a powdery proton conductor having a standard deviation σ of not greater than 0.04 or a powdery proton conductor sintered at 1500°C or higher is used as the anode material. These powdery proton conductors each have small variations in the atomic composition ratio thereof, and thus the anode 3 for which any of these powdery proton conductors is used is less likely to produce the by-product.

More specifically, one aspect of the method for producing the cell structure 1 includes: a first step of preparing a cathode material, a solid electrolyte material having proton conductivity, and an anode material; a second step of laminating a layer containing the anode material and a layer containing the solid electrolyte material and then firing an obtained laminated body at a second firing temperature to form a joined body of the anode 3 and the solid electrolyte layer 4; and a third step of laminating a layer containing the cathode material, on the surface of the solid electrolyte layer 4, and then firing an obtained laminated body to form the cathode 2 (hereinafter, referred to as "production method A for the cell structure 1"). In the production method A for the cell structure 1, the anode material contains a proton conductor and a nickel compound. In this case, the proton conductor is the aforementioned proton conductor. In addition, another aspect of the method for producing the cell structure 1 includes: a first step of preparing a cathode material, a solid electrolyte material having proton conductivity, and an anode material; a second step of laminating a layer containing the anode material and a layer containing the solid electrolyte material and then firing an obtained laminated body at a third firing temperature to form a joined body of the anode 3 and the solid electrolyte layer 4; and a third step of laminating a layer containing the cathode material, on the surface of the solid electrolyte layer 4, and then firing an obtained laminated body to form the cathode 2 (hereinafter, referred to as "production method B for the cell structure 1"). In the production method B for the cell structure 1, the anode material contains a nickel compound and a proton conductor ("powdery proton conductor sintered at 1500°C or higher) obtained by firing a material, which contains the element represented by the A, the element represented by the B, and the element represented by the M in formula (1) at a ratio that satisfies the "a", the "b", and the "c", at a first firing temperature of 1500°C or higher for 20 hours or longer. Hereinafter, each step will be described in detail.

### (First Step)

In the first step, the solid electrolyte material, the anode material, and the cathode material are prepared. At this time, the powdery proton conductor is contained in at least the anode material.

### (Second Step)

In the second step, a layer containing the anode material and a layer containing the solid electrolyte material are laminated and fired to form a joined body of the anode 3 and the solid electrolyte layer 4.

In laminating the layer containing the anode material and the layer containing the solid electrolyte material, from the viewpoint of formability, each material, a binder, and a dispersion medium are preferably mixed to prepare a paste or a slurry in advance. Hereinafter, a paste or slurry containing the anode material is also referred to as "anode dispersion". In addition, a paste or slurry containing the solid electrolyte material is also referred to as "solid electrolyte dispersion". Examples of the binder include publicly known materials used for producing ceramic materials, such as polymer binders and waxes, but are not particularly limited thereto. Examples of the polymer binders include cellulose derivatives, vinyl acetate-based resins, and acrylic resin, but are not particularly limited thereto. Examples of the cellulose derivatives include ethyl cellulose and cellulose ether, but are not particularly limited thereto. The concept of the vinyl acetate-based resins also includes saponified products of vinyl acetate-based resins, such as polyvinyl alcohol. Examples of the waxes include paraffin wax, but are not particularly limited thereto.

The amount of the binder contained in the solid electrolyte dispersion per 100 parts by mass of the solid electrolyte is, for example, 1 part by mass to 20 parts by mass and preferably 1.5 parts by mass to 15 parts by mass. In the case where the anode dispersion is subjected to press-forming, the amount of the binder contained in the anode dispersion per a total amount of 100 parts by mass of the mixture is, for example, 1 part by mass to 15 parts by mass and preferably 3 parts by mass to 10 parts by mass. In the other cases, the amount of the binder contained in the anode dispersion per a total amount of 100 parts by mass of the mixture is, for example, 1 part by mass to 20 parts by mass and preferably 1.5 parts by mass to 15 parts by mass.

Examples of the dispersion medium include water and organic solvents, but are not particularly limited thereto. Examples of the organic solvents include, but are not particularly limited thereto: hydrocarbons such as toluene; alcohols such as ethanol and isopropanol; and carbitols such as butyl carbitol acetate. Furthermore, each dispersion may contain various additives such as a surfactant and a deflocculant, as necessary. Examples of the deflocculant include polycarboxylic acid, but are not particularly limited thereto.

A method for laminating each layer is not particularly limited, and only needs to be selected as appropriate in accordance with a desired thickness of each layer. For example, in the case where the thickness of each layer is not less than several hundreds of micrometers, each dispersion may be formed by press-forming, tape-forming, or the like, and then these dispersions may be laminated. In the case where the thickness of each layer is several micrometers to several hundreds of micrometers, each layer may be laminated by applying each dispersion in an overlapping manner by means of screen printing, spray application, spin coating, dip coating, or the like. In addition, each layer may be laminated by a combination of these methods. The solid electrolyte dispersion is normally laminated on the surface of the layer containing the anode material, by being applied thereto by screen printing, spray application, spin coating, dip coating, or the like.

For example, first, the anode dispersion is formed into a layer having a predetermined shape by press-forming. Examples of the predetermined shape include pellet shape, plate shape, and sheet shape. Prior to this forming, the anode dispersion may be granulated, and the obtained granules may be subjected to forming. In addition, as necessary, the obtained granules may be pulverized, and the obtained pulverized material may be subjected to forming. In the case where the anode 3 includes a region formed from a compound other than the sintered body, a layer that is to be the region formed from the compound other than the sintered body is formed, for example, by the same method, and then a layer that forms the sintered body is laminated thereon.

Next, the solid electrolyte dispersion is applied to the surface of the formed layer containing the anode material, for example, by screen printing, spray application, spin coating, dip coating, or the like to laminate a layer containing the solid electrolyte material, thereby obtaining a laminated body. Before the solid electrolyte dispersion is applied, a step of calcining the layer containing the anode material may be carried out. The calcining only needs to be performed at a temperature (e.g., 900°C to 1100°C) lower than the temperature at which the anode material is sintered. By performing the calcining, it becomes easy to apply the solid electrolyte dispersion.

Subsequently, the laminated body is subjected to firing (main firing). The main firing is performed by heating the obtained laminated body in an oxygen-containing atmosphere at a predetermined temperature. In the case of using, as the anode material, the powdery proton conductor having a standard deviation σ of not greater than 0.04, the main firing is performed at the second firing temperature. In the case of using, as the anode material, the powdery proton conductor sintered at 1500°C or higher, the main firing is performed at the third firing temperature. The oxygen content in the atmosphere for the main firing is not particularly limited, and the conditions therefor may be the same as in a second firing step. The second firing temperature and the third firing temperature are, for example, 1300°C to 1700°C and preferably 1350°C to 1600°C. In the case of using, as the anode material, the powdery proton conductor sintered at 1500°C or higher, the temperature (first firing temperature) at which the first firing of the material that is the powdery proton conductor is performed is preferably not lower than the third firing temperature, from the viewpoint that the variations in the atomic composition ratio are further decreased. The main firing of the laminated body can be performed under normal pressure or under increased pressure.

Before the laminated body is subjected to the main firing, a resin component such as the binder contained in each layer may be removed. That is, after the solid electrolyte dispersion is applied, the laminated body may be heated in the atmosphere to a relatively low temperature of about 500°C to 700°C thereby to remove the resin component contained in each paste. Thereafter, the main firing is performed. By the main firing, the anode material and the solid electrolyte material are co-sintered. That is, by the main firing, an electrolyte layer-anode joined body obtained by integrating the anode 3 and the solid electrolyte layer 4 is formed.

### (Third Step)

In the third step, a layer containing the cathode material is laminated on the surface of the solid electrolyte layer 4 of the electrolyte layer-anode joined body and fired, for example, at 800°C to 1100°C to form the cathode 2. The firing is performed in the same oxygen-containing atmosphere as described above.

The cathode material may also be laminated on the surface of the solid electrolyte layer 4 by using a cathode dispersion such as a paste, slurry, or the like obtained by mixing the cathode material with a binder or the like, similarly to the above. Examples of a method for laminating the cathode dispersion include the same methods as described above. In the case where the cathode dispersion is subjected to press-forming, the amount of the binder contained in the cathode dispersion per 100 parts by mass of the metal oxide is, for example, 1 part by mass to 15 parts by mass and preferably 3 parts by mass to 10 parts by mass. In the other cases, the amount of the binder contained in the cathode dispersion per 100 parts by mass of the metal oxide is, for example, 1 part by mass to 20 parts by mass and preferably 1.5 parts by mass to 15 parts by mass.

### 5. Fuel Cell

A fuel cell according to an embodiment of the present invention includes an anode containing the aforementioned proton conductor. The configuration of the fuel cell only needs to be the same as the configuration of a conventional fuel cell except for the anode containing the proton conductor. Since the fuel cell according to the present embodiment includes the anode containing the proton conductor, the fuel cell can achieve high power generation efficiency.

### 6. Water Electrolysis Device

A water electrolysis device according to an embodiment of the present invention includes an anode containing the aforementioned proton conductor. The configuration of the water electrolysis device only needs to be the same as the configuration of a conventional water electrolysis device that applies a voltage to water to decompose the water into hydrogen and oxygen, except for the anode containing the proton conductor. Since the water electrolysis device according to the present embodiment includes the anode containing the proton conductor, hydrogen and oxygen can be obtained at high production efficiency with the water electrolysis device.

Hereinafter, the present invention will be described in more detail on the basis of Examples. The present invention is not limited to the Examples described below.

### [Example 1]

(1) Production of Powdery Proton Conductor A Containing BaₐZr_{b}Y_{c}O_{3-δ}

A metal oxide represented by formula (3):

BaₐZr_{b}Y_{c}O_{3-δ} (3)

(wherein "a" is a number that satisfies 0.85≤a≤1, "b" is a number that satisfies 0.5≤b<1, "c" is a number that satisfies c=1-b, and δ is an oxygen deficiency amount)
was produced by performing the following operation. The compound represented by formula (3) is one of compounds included in the compounds represented by formula (1).

First, barium carbonate, zirconium oxide, and yttrium oxide were put into a ball mill and mixed for 24 hours such that a mole ratio was achieved at which "a" in formula (3) was 1, "b" in formula (3) was 0.8, and "c" in formula (3) was 0.2. The obtained mixture was dried and then calcined at 1000°C for 10 hours (calcining). After the calcining, the mixture was mixed in the ball mill for 10 hours. The obtained mixture was subjected to uniaxial forming. The obtained formed body was fired in the atmosphere at 1300°C (a preliminary firing temperature) for 10 hours (a preliminary firing step). After the preliminary firing, the formed body was pulverized in a mortar, and the preliminary firing step was performed again using the obtained powder.

The powder obtained through two times of the preliminary firing step was pulverized in the ball mill (rotational speed: 300 rpm) for 24 hours (a pulverization step). Next, the obtained pulverized material was dried and then subjected to uniaxial forming to obtain pellets. The obtained pellets were fired in the atmosphere at 1600°C (a first firing temperature) for 24 hours (a first firing step). Accordingly, a proton conductor A containing the metal oxide having a perovskite structure was obtained. Thereafter, the obtained proton conductor A was pulverized in the ball mill (rotational speed: 300 rpm) for 50 hours to obtain a powdery proton conductor A.

Not less than 90 vol% of secondary particles of the obtained powdery proton conductor A had a particle diameter of 100 nm to 300 nm. For the obtained powdery proton conductor A, a standard deviation σ was calculated according to the aforementioned method. As a result, the standard deviation σ of the powdery proton conductor A was 0.0237. In addition, moisture was removed from crystal of the metal oxide forming the obtained powdery proton conductor A, by heating the powdery proton conductor A in a dry atmosphere at 1000°C. X-ray diffraction of the powdery proton conductor A from which moisture had been removed was investigated to obtain the lattice constant of the powdery proton conductor A. FIG. 4 shows the analysis results. From the results shown in FIG. 4, the lattice constant of the powdery proton conductor A is found to be in the range of not less than 4.220 and not greater than 4.225. From these results, the lattice constant of the powdery proton conductor A is substantially equal to the theoretical lattice constant of a perovskite compound having the same composition as a feeding composition calculated from the feeding amounts of barium carbonate, zirconium oxide, and yttrium oxide. Thus, the powdery proton conductor A is speculated to have small variations in the atomic composition ratio thereof and have a desired perovskite structure.

### (2) Production of Anode Powder

The powdery proton conductor A obtained in (1) of Example 1 was used as an anode material. The powdery proton conductor A and nickel oxide (NiO) were mixed with an adequate amount of isopropanol by using a ball mill. The obtained mixture was dried to obtain anode powder. At this time, the powdery proton conductor A and NiO were mixed such that powdery proton conductor A/NiO (mass ratio) was 30/70.

### (3) Preparation of Solid Electrolyte Paste

The powdery proton conductor A obtained in (1) of Example 1 was used as a solid electrolyte. The powdery proton conductor A, ethyl cellulose (a binder, degree of ethoxylation: about 49%), and α-terpineol (a solvent) were mixed to prepare a solid electrolyte paste. The mixing ratio (mass ratio) of the powdery proton conductor A, the binder, and the solvent was set as powdery proton conductor A/binder/solvent=50/2/48.

### (4) Production of Solid Electrolyte Layer-Anode Joined Body

The anode powder obtained in (2) of Example 1 was subjected to uniaxial forming to form disc-shaped pellets (diameter: 11 mm). The obtained pellets were calcined at 1000°C (calcining). After the calcining, the solid electrolyte paste obtained in (3) of Example 1 was applied to one main surface of each pellet by means of spin coating to form a coating film thereon. De-binder treatment was performed on the pellets having the coating films thereon, by heating the pellets at 600°C for 10 hours. Next, the obtained pellets were fired at 1500°C (a third firing temperature) for 10 hours (main firing) to obtain a solid electrolyte layer-anode joined body A (hereinafter, also referred to merely as "joined body A"). The thickness of the joined body A was about 1.4 mm, and the thickness of the solid electrolyte layer was 10 µm.

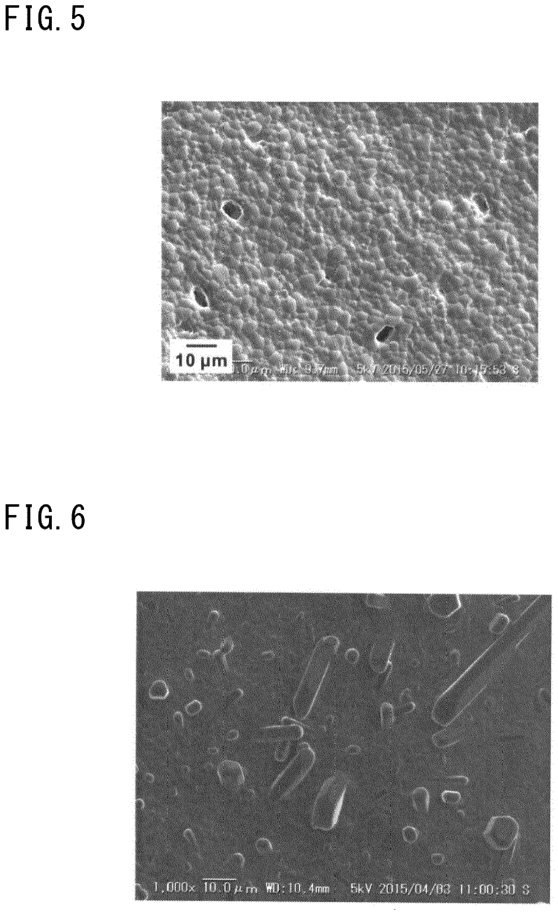

The surface of the solid electrolyte layer of the obtained joined body A was photographed by using a scanning electron microscope (SEM). FIG. 5 shows an SEM image of the joined body A obtained in (4) of Example 1. From the result shown in FIG. 5, it is found that the surface of the solid electrolyte layer is uniform and thus needle-shaped or plate-shaped crystal that is considered as BaY₂NiO₅ cannot be confirmed. In addition, X-ray diffraction of the surface of the solid electrolyte layer of the obtained joined body A was investigated. Thereafter, the result of the X-ray diffraction (XRD) was analyzed by the Rietveld method to quantify a BaZrO₃ phase and by-products (BaY₂NiO₅, Y₂O₃). As a result, the BaZrO₃ phase was 98 mass%, BaY₂NiO₅ was 0 mass%, and Y₂O₃ was 2 mass%.

### [Example 2]

A powdery proton conductor B was produced by performing the same operation as in Example 1 except that the first firing temperature was set to 1500°C. Not less than 90 vol% of secondary particles of the obtained powdery proton conductor B had a particle diameter of 100 nm to 300 nm. For the obtained powdery proton conductor B, a standard deviation σ was calculated according to the aforementioned method. As a result, the standard deviation σ of the powdery proton conductor B was 0.0114. In addition, moisture was removed from crystal of the metal oxide forming the obtained powdery proton conductor B. X-ray diffraction of the powdery proton conductor B from which moisture had been removed was investigated to obtain the lattice constant of the powdery proton conductor B. FIG. 4 shows the analysis results. From the results shown in FIG. 4, the lattice constant of the powdery proton conductor B is found to be in the range of not less than 4.220 and not greater than 4.225. From these results, the lattice constant of the powdery proton conductor B is substantially equal to the theoretical lattice constant of a perovskite compound having the same composition as a feeding composition calculated from the feeding amounts of barium carbonate, zirconium oxide, and yttrium oxide. Thus, the powdery proton conductor B is speculated to have small variations in the atomic composition ratio thereof and have a desired perovskite structure.

### [Example 3]

A powdery proton conductor C was produced by performing the same operation as in Example 1 except that barium carbonate, zirconium oxide, and yttrium oxide were mixed such that a mole ratio was achieved at which "a" in formula (3) was 0.98, "b" in formula (3) was 0.8, and "c" in formula (3) was 0.2. The standard deviation σ of the powdery proton conductor C was 0.0165. Not less than 90 vol% of secondary particles of the obtained powdery proton conductor C had a particle diameter of 100 nm to 300 nm. Moisture was removed from crystal of the metal oxide forming the obtained powdery proton conductor C. X-ray diffraction of the powdery proton conductor C from which moisture had been removed was investigated to obtain the lattice constant of the powdery proton conductor C. FIG. 4 shows the analysis results. From the results shown in FIG. 4, the lattice constant of the powdery proton conductor C is found to be in the range of equal to or greater than 4.200 and less than 4.220. From these results, the lattice constant of the powdery proton conductor C is substantially equal to the theoretical lattice constant of a perovskite compound having the same composition as a feeding composition calculated from the feeding amounts of barium carbonate, zirconium oxide, and yttrium oxide. Thus, the powdery proton conductor C is speculated to have small variations in the atomic composition ratio thereof and have a desired perovskite structure.

### [Example 4]

A powdery proton conductor D was produced by performing the same operation as in Example 1 except that barium carbonate, zirconium oxide, and yttrium oxide were mixed such that a mole ratio was achieved at which the ratio "a" of the number of atoms of Ba relative to the number of all the atoms in formula (3) was 0.95. The standard deviation σ of the powdery proton conductor D was 0.0366. Not less than 90 vol% of secondary particles of the obtained powdery proton conductor D had a particle diameter of 100 nm to 300 nm. Moisture was removed from crystal of the metal oxide forming the obtained powdery proton conductor D. X-ray diffraction of the powdery proton conductor D from which moisture had been removed was investigated to obtain the lattice constant of the powdery proton conductor D. FIG. 4 shows the analysis results. From the results shown in FIG. 4, the lattice constant of the powdery proton conductor D is found to be in the range of equal to or greater than 4.200 and less than 4.220. From these results, the lattice constant of the powdery proton conductor D is substantially equal to the theoretical lattice constant of a perovskite compound having the same composition as a feeding composition calculated from the feeding amounts of barium carbonate, zirconium oxide, and yttrium oxide. Thus, the powdery proton conductor D is speculated to have small variations in the atomic composition ratio thereof and have a desired perovskite structure.

### [Comparative Example 1]

A powdery proton conductor a and a solid electrolyte layer-anode joined body a (hereinafter, also referred to merely as "joined body a") were produced by performing the same operation as in Example 1 except that the first firing temperature was set to 1300°C. For the obtained powdery proton conductor a, a standard deviation σ was calculated according to the aforementioned method. The standard deviation σ of the powdery proton conductor a was 0.0631. In addition, moisture was removed from crystal of the metal oxide forming the powdery proton conductor a. X-ray diffraction of the powdery proton conductor a from which moisture had been removed was investigated to obtain the lattice constant of the powdery proton conductor a. FIG. 4 shows the analysis results. From the results shown in FIG. 4, the lattice constant of the powdery proton conductor a is found to be in the range of 4.195 to 4.2. From these results, the range of the lattice constant of the powdery proton conductor a is out of the range of the lattice constants of the powdery proton conductors obtained in Examples 1 to 4. Thus, the powdery proton conductor a is speculated to have large variations in the atomic composition ratio thereof.

The surface of the solid electrolyte layer of the obtained joined body a was photographed by using an SEM. FIG. 6 shows an SEM image of the joined body a obtained in Comparative Example 1. From the result shown in FIG. 5, it is found that needle-shaped or plate-shaped crystal that is considered as BaY₂NiO₅ is present on the surface of the solid electrolyte layer. In addition, a BaZrO₃ phase and by-products (BaY₂NiO₅, Y₂O₃) were quantified by performing the same operation as in Example 1 on the joined body a. As a result, the BaZrO₃ phase was 88.2 mass%, BaY₂NiO₅ was 8.5 mass%, and Y₂O₃ was 3.3 mass%.

### [Production Example 1]

The powdery proton conductor A obtained in Example 1 and NiO were mixed such that powdery proton conductor A/NiO (mass ratio) was 3/7. The obtained mixture was dried to obtain anode powder. The obtained anode powder was subjected to uniaxial forming to obtain disc-shaped pellets A (diameter: 11 mm). Next, the obtained pellets A were fired at respective third firing temperatures (temperatures in the range of 800 to 1600°C) shown in Table 1 for 10 hours (main firing) to produce anodes A1 to A9. That is, without forming a solid electrolyte layer, the pellets A were fired at the respective third firing temperatures shown in Table 1 to obtain anodes A1 to A9. X-ray diffraction of each of the obtained pellets A and the obtained anodes A1 to A9 was investigated. Thereafter, the results of the X-ray diffraction (XRD) were analyzed by the Rietveld method to quantify a BaZrO₃ phase, NiO, and by-products (BaY₂NiO₅, Y₂O₃). Table 1 shows the results.

**[Table 1]**

| Sample | Third firing temperature (°C) | BaZrO₃ phase (mass%) | NiO (mass%) | BaY₂NiO₅ (mass%) | Y₂O₃ (mass%) |
|---|---|---|---|---|---|
| A | - | 24 | 76 | 0 | 0 |
| A1 | 800 | 25.2 | 74.8 | 0 | 0 |
| A2 | 900 | 25.6 | 74.4 | 0 | 0 |
| A3 | 1000 | 25.3 | 74.7 | 0 | 0 |
| A4 | 1100 | 24.5 | 75.5 | 0 | 0 |
| A5 | 1200 | 23.9 | 74.9 | 1.1 | 0 |
| A6 | 1300 | 23.4 | 75 | 1.7 | 0 |
| A7 | 1400 | 22.2 | 76.2 | 0 | 1.6 |
| A8 | 1500 | 30.1 | 67.8 | 0 | 2.2 |
| A9 | 1600 | 20.5 | 75.8 | 0 | 3.8 |

### [Production Example 2]

Pellets C and anodes C1 to C9 were obtained by performing the same operation as in Production Example 1 except that the powdery proton conductor C obtained in Example 3 and NiO were mixed such that powdery proton conductor C/NiO (mass ratio) was 1/2. X-ray diffraction of the obtained pellets C and the obtained anodes C1 to C9 was investigated. Thereafter, the results of the X-ray diffraction (XRD) were analyzed by the Rietveld method to quantify a BaZrO₃ phase, NiO, and by-products (BaY₂NiO₅, Y₂O₃). Table 2 shows the results.

**[Table 2]**

| Sample | Third firing temperature (°C) | BaZrO₃ phase (mass%) | NiO (mass%) | BaY₂NiO₅ (mass%) | Y₂O₃ (mass%) |
|---|---|---|---|---|---|
| C | - | 33.3 | 66.7 | 0 | 0 |
| C1 | 800 | 33.4 | 66.6 | 0 | 0 |
| C2 | 900 | 34.3 | 65.7 | 0 | 0 |
| C3 | 1000 | 35.4 | 64.6 | 0 | 0 |
| C4 | 1100 | 35.3 | 64.7 | 0 | 0 |
| C5 | 1200 | 33.9 | 64.9 | 0 | 1.2 |
| C6 | 1300 | 31.4 | 67.1 | 0 | 1.5 |
| C7 | 1400 | 33.5 | 65.1 | 0 | 1.4 |
| C8 | 1500 | 31.2 | 66.6 | 0 | 2.2 |
| C9 | 1600 | 28.8 | 69 | 0 | 2.2 |

### [Production Example 3]

Pellets D and anodes D1 to D9 were obtained by performing the same operation as in Production Example 1 except that the powdery proton conductor D obtained in Example 4 and NiO were mixed such that powdery proton conductor D/NiO (mass ratio) was 1/2. X-ray diffraction of the obtained pellets D and the obtained anodes D1 to D9 was investigated. Thereafter, the results of the X-ray diffraction (XRD) were analyzed by the Rietveld method to quantify a BaZrO₃ phase, NiO, and by-products (BaY₂NiO₅, Y₂O₃). Table 3 shows the results.

**[Table 3]**

| Sample | Third firing temperature (°C) | BaZrO₃ phase (mass%) | NiO (mass%) | BaY₂NiO₅ (mass%) | Y₂O₃ (mass%) |
|---|---|---|---|---|---|
| D | - | 33.6 | 66.4 | 0 | 0 |
| D1 | 800 | 34.4 | 65.6 | 0 | 0 |
| D2 | 900 | 33.6 | 66.4 | 0 | 0 |
| D3 | 1000 | 34.4 | 65.6 | 0 | 0 |
| D4 | 1100 | 34.7 | 65.3 | 0 | 0 |
| D5 | 1200 | 33.1 | 65.7 | 0 | 1.2 |
| D6 | 1300 | 32.3 | 65.8 | 0 | 1.9 |
| D7 | 1400 | 32.9 | 65.2 | 0 | 1.9 |
| D8 | 1500 | 31.3 | 65.6 | 0 | 3.1 |
| D9 | 1600 | 31 | 65 | 0 | 4 |

### [Comparative Production Example 1]

Pellets a and anodes a1 to a9 were obtained by performing the same operation as in Production Example 1 except that the powdery proton conductor a obtained in Comparative Example 1 and NiO were mixed such that powdery proton conductor a/NiO (mass ratio) was 3/7. X-ray diffraction of the obtained pellets a and the obtained anodes a1 to a9 was investigated. Thereafter, the results of the X-ray diffraction (XRD) were analyzed by the Rietveld method to quantify a BaZrO₃ phase, NiO, and by-products (BaY₂NiO₅, Y₂O₃). Table 4 shows the results.

**[Table 4]**

| Sample | Third firing temperature (°C) | BaZrO₃ phase (mass%) | NiO (mass%) | BaY₂NiO₅ (mass%) | Y₂O₃ (mass%) |
|---|---|---|---|---|---|
| a | - | 21 | 79 | 0 | 0 |
| a1 | 800 | 23.1 | 76.2 | 0 | 0.6 |
| a2 | 900 | 24.9 | 74.3 | 0 | 0.9 |
| a3 | 1000 | 23.4 | 73.4 | 3.3 | 0 |
| a4 | 1100 | 22.2 | 74.4 | 3.4 | 0 |
| a5 | 1200 | 23.5 | 73.1 | 3.4 | 0 |
| a6 | 1300 | 23.4 | 74.1 | 2.5 | 0 |
| a7 | 1400 | 22.4 | 75.3 | 1.1 | 1.2 |
| a8 | 1500 | 22.5 | 75.5 | 0 | 2 |
| a9 | 1600 | 19.8 | 77.8 | 0 | 2.3 |

In Tables 1 to 4, the by-product BaY₂NiO₅ easily decomposes. In addition, the decomposition product of BaY₂NiO₅ is a compound that clogs voids of the anode and the cathode to obstruct oxidation reaction. On the other hand, the by-product Y₂O₃ is a compound that is hard to decompose. From the results shown in Table 4, it is found that in the anodes a1 to a9 of Comparative Production Example 1, the by-product BaY₂NiO₅ was produced in a large amount at a general temperature (about 1000 to 1300°C) at which main firing of the solid electrolyte layer-anode joined body is performed. On the other hand, from the results shown in Tables 1 to 3, it is found that in the anodes A1 to A9 of Production Example 1, the anodes C1 to C9 of Production Example 2, and the anodes D1 to D9 of Production Example 3, production of the by-product BaY₂NiO₅ was inhibited regardless of the third firing temperature. Among these anodes, in each anode of Production Examples 2 and 3 in which the ratio "a" of the number of atoms of Ba relative to the number of all the atoms in formula (3) is low, no production of the by-product BaY₂NiO₅ was confirmed.

In the anodes a1 to a9 of Comparative Production Example 1, the powdery proton conductor a (standard deviation σ: 0.0631) of Comparative Example 1 was used as the material. On the other hand, in the anodes A1 to A9 of Production Example 1, the powdery proton conductor A (standard deviation σ: 0.0237) of Example 1 was used as the material. In the anodes C1 to C9 of Production Example 2, the powdery proton conductor B (standard deviation σ: 0.0165) of Example 3 was used as the material. In the anodes D1 to D9 of Production Example 3, the powdery proton conductor B (standard deviation σ: 0.0366) of Example 4 was used as the material. In consideration of these, from the results shown in Tables 1 to 4, it is found that, with the proton conductor that contains the metal oxide represented by formula (1) and the standard deviation of which is not greater than 0.04, the amount of the by-product that can produce a decomposition product that limits oxidation reaction and reduction reaction in producing a cell structure can be reduced. In addition, with the cell structure in which the proton conductor is used as the material, since the amount of the by-product is reduced, a decomposition product that limits oxidation reaction and reduction reaction is less likely to be produced during operation of a fuel cell, a gas decomposing device, or the like. Therefore, with the cell structure, ensuring high power generation efficiency is expected.

The powdery proton conductor a of Comparative Example 1 was produced by performing the first firing at a first firing temperature of 1300°C. On the other hand, the powdery proton conductor A of Example 1, the powdery proton conductor B of Example 3, and the powdery proton conductor B of Example 4 were produced by performing the first firing at a first firing temperature of 1600°C. In consideration of these, from the results shown in Tables 1 to 4, it is found that by performing the first firing at a first firing temperature of 1500°C or higher, the amount of the by-product that is a by-product contained in the obtained cell structure and that can produce a decomposition product that limits oxidation reaction and reduction reaction, can be reduced.

### REFERENCE SIGNS LIST

- 1: cell structure
- 2: cathode
- 3: anode
- 4: solid electrolyte layer

## Claims

1. A proton conductor containing a metal oxide having a perovskite structure and represented by formula (1):
AₐB_{b}M_{c}O_{3-δ} (1)
(wherein: A is at least one element selected from the group consisting of Ba, Ca, and Sr; B is at least one element selected from the group consisting of Ce and Zr; M is at least one element selected from the group consisting of Y, Yb, Er, Ho, Tm, Gd, In, and Sc; "a" is a number that satisfies 0.85≤a≤1; "b" is a number that satisfies 0.5≤b<1; "c" is a number that satisfies c=1-b; and δ is an oxygen deficiency amount), wherein
a standard deviation in a triangular diagram representing an atomic composition ratio of the A, the B, and the M contained in the proton conductor is not greater than 0.04.

2. The proton conductor according to claim 1, wherein
in the formula (1),
the A contains Ba,
the B contains Zr, and
the M contains Y.

3. The proton conductor according to claim 1 or 2, wherein the standard deviation in the triangular diagram representing the atomic composition ratio of the A, the B, and the M contained in the proton conductor is not greater than 0.037.

4. A method for producing a proton conductor containing a metal oxide having a perovskite structure and represented by formula (1):
AₐB_{b}M_{c}O_{3-δ} (1)
(wherein: A is at least one element selected from the group consisting of Ba, Ca, and Sr; B is at least one element selected from the group consisting of Ce and Zr; M is at least one element selected from the group consisting of Y, Yb, Er, Ho, Tm, Gd, In, and Sc; "a" is a number that satisfies 0.85≤a≤1; "b" is a number that satisfies 0.5≤b<1; "c" is a number that satisfies c=1-b; and δ is an oxygen deficiency amount), the method comprising:
a preparation step of preparing a material containing an element represented by the A, an element represented by the B, and an element represented by the M, at a ratio that satisfies the "a", the "b", and the "c"; and
a firing step of firing the material at a first firing temperature of 1500°C or higher for 20 hours or longer.

5. The method for producing the proton conductor according to claim 4, further comprising a preliminary firing step of preliminarily firing the material at a temperature less than 1500°C, after the preparation step and before the firing step.

6. The method for producing the proton conductor according to claim 5, further comprising a pulverization step of pulverizing the preliminarily fired material, after the preliminary firing step and before the firing step.

7. The method for producing the proton conductor according to any one of claims 3 to 5, wherein the first firing temperature is not lower than 1600°C.

8. A cell structure comprising:
a cathode;
an anode; and
a solid electrolyte layer interposed between the cathode and the anode and having proton conductivity, wherein
the anode contains the proton conductor according to claim 1 and a nickel compound.

9. A method for producing a cell structure, the method comprising:
a step of preparing a cathode material, a solid electrolyte material having proton conductivity, and an anode material;
a step of laminating a layer containing the anode material and a layer containing the solid electrolyte material and then firing an obtained laminated body at a second firing temperature to form a joined body of an anode and a solid electrolyte layer; and
a step of laminating a layer containing the cathode material, on a surface of the solid electrolyte layer and firing an obtained laminated body to form a cathode, wherein
the anode material contains a proton conductor and a nickel compound, and
the proton conductor is the proton conductor according to claim 1.

10. A method for producing a cell structure, the method comprising:
a step of preparing a cathode material, a solid electrolyte material having proton conductivity, and an anode material;
a step of laminating a layer containing the anode material and a layer containing the solid electrolyte material and then firing an obtained laminated body at a third firing temperature to form a joined body of an anode and a solid electrolyte layer; and
a step of laminating a layer containing the cathode material, on a surface of the solid electrolyte layer and firing an obtained laminated body to form a cathode, wherein
the anode material contains a proton conductor and a nickel compound, and
the proton conductor contains a metal oxide having a perovskite structure and represented by formula (1):
AₐB_{b}M_{c}O_{3-δ} (1)
(wherein: A is at least one element selected from the group consisting of Ba, Ca, and Sr; B is at least one element selected from the group consisting of Ce and Zr; M is at least one element selected from the group consisting of Y, Yb, Er, Ho, Tm, Gd, In, and Sc; "a" is a number that satisfies 0.85≤a≤1; "b" is a number that satisfies 0.5≤b<1; "c" is a number that satisfies c=1-b; and δ is an oxygen deficiency amount)
and is obtained by firing a material containing an element represented by the A, an element represented by the B, and an element represented by the M at a ratio that satisfies the "a", the "b", and the "c", at a first firing temperature of 1500°C or higher for 20 hours or longer.

11. The method for producing the cell structure according to claim 10, wherein the first firing temperature is higher than the third firing temperature.

12. A fuel cell comprising an anode containing the proton conductor according to any one of claims 1 to 3.

13. A water electrolysis device comprising an anode containing the proton conductor according to any one of claims 1 to 3.
